# EUROPÄISCHE PATENTSCHRIFT

(11) **EP 2 415 654 B1**
(45) Veröffentlichungstag und Bekanntmachung des Hinweises auf die Patenterteilung: **17.05.2017**
(21) Anmeldenummer: 11005583.7
(22) Anmeldetag: 08.07.2011
(51) Int. Cl.: B62D 21/11

(54) **Hilfsrahmen für Kraftfahrzeuge**
Subframe for a motor vehicle
Berceau pour véhicules automobiles

(30) Priorität: 04.08.2010 DE 102010033333
(43) Veröffentlichungstag der Anmeldung: 08.02.2012
(73) Patentinhaber: Audi AG, 85045 Ingolstadt (DE)
(72) Erfinder: Kramer, Tobias, 85134 Stammham (DE); Rugies, Stefan, 93501 Regensburg (DE)
(74) Vertreter: Asch, Konrad

(56) Entgegenhaltungen:
- DE-A1- 10 052 940
- DE-A1- 19 920 051
- DE-A1-102006 057 665

## Beschreibung

Die Erfindung betrifft einen Hilfsrahmen für Kraftfahrzeuge gemäß dem Oberbegriff des Patentanspruches 1.

Derartige Hilfsrahmen (auch als Fahrschemel oder Achsträger bezeichnet) sollen möglichst gewichtsgünstig bei hoher Festigkeit und Steifigkeit ausgeführt sein und weisen zumeist auch Lageraufnahmen für Radführungselemente, Aggregatelager, Lenkgetriebe, etc. auf, um als Vormontageeinheit den Einbau kompletter Achsmodule mit Antriebseinheiten zu ermöglichen.

Ein Hilfsrahmen der gattungsgemäßen Art ist beispielsweise in der DE 100 52 940 A1 beschrieben, wobei der Querträger des Hilfsrahmens unmittelbar durch das Zahnstangen-Lenkgetriebe gebildet ist. Dabei ist das Gehäuse des Lenkgetriebes über jeweils zwei Schraubverbindungen fest mit den Längsträgern des Hilfsrahmens verschraubt. Ein ähnlicher Hilfsrahmen ist in der DE 102 35 110 A1 gezeigt, bei der das Zahnstangen-Lenkgetriebe von unten an die Längsträger angeschraubt ist und der Hilfsrahmen mittels eines zweiten Querträgers weiter ausgesteift ist.

Aufgabe der Erfindung ist es, einen Hilfsrahmen für Kraftfahrzeuge vorzuschlagen, der bei einer räumlich besonders biegesteifen und gewichtsgünstigen Konstruktion eine montagegünstige Anordnung des Zahnstangen-Lenkgetriebes ermöglicht.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß wird vorgeschlagen, den Hilfsrahmen in etwa U-förmig auszubilden, mit zwei seitlichen Längsträgern als U-Schenkel und einem damit lösbar verbundenen Querträger als U-Basis, wobei der Querträger und/oder der Längsträger zusätzlich mit einem Lenkgetriebegehäuse versteift ist. Weiter ist vorgesehen, dass der Hilfsrahmen zusätzlich mit einem zwischen den Längsträgern verlaufenden Versteifungselement versteift ist, das mit dem Querträger fest verbunden ist. Besonders bevorzugt liegt dabei der Querträger in etwa in der durch das Versteifungselement aufgespannten Ebene, wozu der Querträger bevorzugt eine in etwa plattenförmige und/oder flächige Form bzw. Gestalt aufweist.

Mit einer derartigen erfindungsgemäßen Lösung kann vorteilhaft auf einen Querträger verzichtet werden, der im Wesentlichen zwischen den beiden Längsträgern verläuft und, bezogen auf die Fahrzeughochachsenrichtung, derart hoch angesetzt ist, dass dieser das Lenkgetriebegehäuse in Fahrtrichtung gesehen von vorne her abdeckt. Dadurch ergeben sich wesentliche konstruktive Freiheiten für die Anordnung von Bauteilen. Um dennoch eine ausreichende Steifigkeit des erfindungsgemäßen Hilfsrahmens auch bei nach unten, das heißt unter das Lenkgetriebegehäuse verlagertem Querträger zu schaffen, ist vorgesehen, dass der Querträger dort fest mit dem zusätzlichen, die Längsträger versteifenden Versteifungselement verbunden ist und dass der Querträger und/oder die Längsträger mit dem Lenkgetriebegehäuse versteift ist bzw. sind.

Gemäß einer ersten Ausführungsvariante kann vorgesehen sein, dass das Lenkgetriebegehäuse lediglich mit dem Querträger verbunden ist, wobei hier das Lenkgetriebegehäuse insbesondere mittels mehrerer Befestigungsschrauben mit dem Querträger verschraubt sein kann. Eine derartige einfache bzw. einschnittige Festlegung des Lenkgetriebegehäuses ist besonders einfach und fertigungstechnisch wenig aufwändig herstellbar. Insbesondere in diesem Fall ist vorgesehen, dass die Längsträger mit dem Querträger mittels mehrerer Befestigungsmittel, insbesondere mittels mehrerer Befestigungsschrauben verbunden sind.

Bei dieser Ausgestaltung sind somit die Längsträger nicht unmittelbar mit dem Lenkgetriebegehäuse verbunden.

Gemäß einer besonders bevorzugten erfindungsgemäßen Ausgestaltung wird jedoch ein Bauteilverbund vorgeschlagen, bei dem das Lenkgetriebegehäuse zu dessen Festlegung am Querträger mit gegenüberliegenden Gehäusebereichen jeweils zwischen den Längsträgern und dem Querträger angeordnet bzw. eingespannt ist. Bevorzugt ist in diesem Fall weiter vorgesehen, dass Befestigungsmittel, insbesondere Befestigungsschrauben entweder vom Querträger her durch entsprechende Lenkgetriebegehäusebereiche hindurch in den jeweiligen Längsträger eingeschraubt werden. Alternativ dazu kann selbstverständlich auch ein Durchschrauben von Seiten des Längsträgers aus durch die Lenkgetriebegehäusebereiche hindurch in den Querträger erfolgen. Mit einem derartigen Bauteilverbund und einer sogenannten zweischnittigen Einbindung des Lenkgetriebegehäuses zwischen Querträger und Längsträger ergibt sich eine besonders hohe Biegesteifigkeit des Hilfsrahmens bei einer nach wie vor gewichtsgünstigen und robusten Konstruktion. Ferner ist damit auch eine nach wie vor einfache Montage und gegebenenfalls Demontage des Hilfsrahmens bzw. des Lenkgetriebes gegeben. Mit dieser Konstruktion, bei der das Gehäuse des Lenkgetriebes zwischen den Längsträgern und dem darunter angeordneten, das Lenkgetriebe von unten abdeckenden und bevorzugt lösbar an den Längsträgern angebundenen Querträger eingespannt ist, ergibt sich somit eine besonders steife Hilfsrahmenkonstruktion in einer kompakten und fertigungstechnisch wenig aufwändigen Art und Weise. Bevorzugt ist für einen derartigen Aufbau ein Funktionsknoten des Längsträgers so nach innen in Richtung zum Lenkgetriebegehäuse hin vergrößert, dass dieser auf den zugeordneten, endseitigen Lenkgetriebegehäusebereich von oben her (in Fahrzeughochachsenrichtung betrachtet) aufgesetzt ist.

Gemäß einer weiteren alternativen Ausführungsform kann weiter vorgesehen sein, dass das Lenkgetriebegehäuse lediglich mit den Längsträgern verbunden ist. In diesem Fall ist insbesondere vorgesehen, dass das Lenkgetriebegehäuse am Funktionsknoten der Längsträger angebunden ist, an denen auch der Querträger beabstandet zu den Anbindungspunkten des Lenkgetriebegehäuses angebunden ist. Mit einem derartigen Aufbau wird somit das Lenkgetriebegehäuse quasi hängend an den Längsträgern, insbesondere an den in Fahrzeuglängsrichtung bzw. in Fahrtrichtung gesehen vorderen Funktionsknoten der Längsträger festgelegt. Das heißt, die Längsträger werden demnach jeweils separat zum einen durch das Lenkgetriebegehäuse und zum anderen durch den darunterliegenden Querträger ausgesteift, weil das Lenkgetriebegehäuse keinen direkten Kontakt mehr zum Querträger aufweist. Auch damit ergibt sich eine hervorragende Aussteifung des Hilfsrahmens.

Des Weiteren wird vorgeschlagen, dass sich die Längsträger im Wesentlichen aus jeweils einem Längsabschnitt, insbesondere einem rohrförmigen Abschnitt, und einem Funktionsknoten als Kopfstück, insbesondere einem in der Seitenansicht gesehen etwa rechteckförmigen, quaderartigen oder quadratischen Funktionsknoten zusammensetzen, welcher Funktionsknoten über wenigstens ein, bevorzugt mehrere lösbare Befestigungsmittel, insbesondere über zumindest zwei Befestigungsschrauben, an den Aufbau-Längsträgern befestigt ist und an seiner Unterseite eine, bezogen auf die Fahrzeughochachsenrichtung und den montierten Zustand, nach unten offenen Ausnehmung aufweist, die bevorzugt das Gehäuse des Lenkgetriebes einschuht bzw. gegebenenfalls auch trägt. Daraus resultiert eine baulich kompakte Anordnung des Lenkgetriebes mit nach unten anschließender Abdeckung des Hilfsrahmens.

Fertigungstechnisch besonders günstig kann der Funktionsknoten das Kopfstück als Gussteil ausgeführt sein, mit einer Basiswand und aussteifenden Rippen und Randflanschen, wobei bevorzugt vorgesehen ist, dass an den unteren Randflanschen des Funktionsknotens das Gehäuse des Lenkgetriebes und der Querträger festlegbar bzw. anschraubbar sind.

Ferner können an den Funktionsknoten der Längsträger separat hergestellte Lageraufnahmen für Aggregatelager, zum Beispiel für Motorlager, oder Aggregatelager selbst befestigt sein, die einen Grundkörper aufweisen, der jeweils durch angeformte Befestigungskonsolen mit den Funktionsknoten der Längsträger und/oder dem darunter angeordneten Querträger und/oder dem Lenkgetriebegehäuse verbunden, insbesondere mittels wenigstens einer Schraubverbindung verschraubt ist. Durch diese Maßnahme werden baulich einfache, fertigungstechnisch günstige Bauteile des Hilfsrahmens gebildet, die zudem weiter aussteifend wirken.

Insbesondere wird dazu vorgeschlagen, dass jeweils wenigstens eine seitliche, insbesondere lösbare Verbindung, bevorzugt mehrere seitliche lösbare Verbindungen, zwischen den Lageraufnahmen bzw. Aggregatelagern und den Funktionsknoten zusammen mit wenigstens einer in Fahrzeughochachsenrichtung bzw. im montierten Zustand darunter liegenden, bevorzugt nach innen versetzten Verbindung, insbesondere einer Schraubverbindung, zwischen der Lageraufnahme bzw. dem Aggregatelager und dem Querträger sowie mit der wenigstens einen in Fahrzeughochachsenrichtung unteren Verbindung, insbesondere wenigstens einer Schraubverbindung, zwischen den Funktionsknoten der Längsträger und dem Querträger ein die Verbindungen bzw. Schraubverbindungen und damit den Hilfsrahmen aussteifendes Dreieck bilden.

In vorteilhafter Weiterbildung der Erfindung kann das zusätzlich zu dem Querträger die Längsträger aussteifende Versteifungselement durch eine fachwerkartige Verstrebung gebildet sein. Eine derartige Verstrebung ermöglicht eine besonders biegesteife Ausbildung des Hilfsrahmens mit definiertem Verformungsverhalten in einem Crashfall.

Gemäß einer ersten Ausführungsform kann das Versteifungselement als separates ein- oder mehrstückiges Bauteil ausgebildet sein, das mit den Längsträgern fest verbunden ist, bevorzugt mittels einer lösbaren Verbindung, wie beispielsweise einer Schraubverbindung verbunden ist.

Alternativ und besonders bevorzugt kann die fachwerkartige Verstrebung einstückig und/oder materialeinheitlich mit dem Querträger ausgeführt sein, wobei bevorzugt vorgesehen ist, dass seitliche Abschnitte des Versteifungselementes an den Längsträgern festgelegt, insbesondere mittels wenigstens einer Schraubverbindung angeschraubt sind. Das heißt, dass die Querträgerplatte mit der Verstrebung als gemeinsames Bauteil montierbar bzw. demontierbar ist, wobei durch die relativ große Abstützbasis der beispielsweise Schraubverbindungen eine hohe Biegesteifigkeit bei sehr geringem Bauteilgewicht erzielbar ist.

Dabei können ferner zur Schaffung besonders steifer und kompakter Anbindungspunkte an die Funktionsknoten und/oder an die zum Beispiel rohrförmigen Längsabschnitte der Längsträger jeweils im Anbindungsbereich des Querträgers und/oder des Versteifungselementes Lageraufnahmen für Radaufhängungselemente angeordnet sein, die zuverlässig die an Radaufhängungselementen wirkenden Belastungen und Momente aufnehmen.

Schließlich können die Lageraufnahmen im Endbereich der zum Beispiel rohrförmigen Längsabschnitte der Längsträger durch in der Draufsicht etwa U-förmige Gussteile gebildet sein, die auch Befestigungsflansche für die Befestigung der Längsträger an den Aufbau-Längsträgern des Kraftfahrzeuges aufweisen und die mit den Längsabschnitten fest verbunden, zum Beispiel verschweißt, oder einstückig mit diesen ausgebildet sind.

Mehrere Ausführungsbeispiele der Erfindung sind im folgenden mit weiteren Einzelheiten näher erläutert. Die schematische Zeichnung zeigt in:
- Fig. 1: eine Draufsicht auf einen Hilfsrahmen für ein Kraftfahrzeug, mit zwei Längsträgern, einem Querträger und einem auf dem Querträger befestigten, diesen aussteifenden ZahnstangenLenkgetriebe;
- Fig. 2: eine weitere Draufsicht auf den Hilfsrahmen gemäß Fig. 1, wobei an den ohne Lenkgetriebe dargestellten Querträger eine den Hilfsrahmen weiter aussteifende, fachwerkartige Verstrebung angeschraubt ist;
- Fig. 3: eine alternative Ausbildung des Querträgers nach den Fig. 1 und 2 mit einer einstückigen Gestaltung des Querträgers und der fachwerkartigen Verstrebung;
- Fig. 4: eine weitere Draufsicht auf einen Hilfsrahmen mit zwei Längslenkern, einem Querträger und einem Lenkgetriebe, wobei Aufnahmekonsolen des Lenkgetriebes in die Schraubverbindungen zwischen dem Querträger und den Längslenkern integriert sind;
- Fig. 5: eine Ansicht des Hilfsrahmens nach Fig. 4 von schräg unten mit von den Längslenkern beabstandet gezeichnetem Querträger und Lenkgetriebe;
- Fig. 6: eine Einzelheit Z der Schraubverbindung zwischen dem Querträger, dem Lenkgetriebe und einem der Längslenker;
- Fig. 7: eine Teilansicht eines der Längslenker, des Querträgers, des Lenkgetriebes und einer als separates Bauteil ausgeführten Lageraufnahme des Hilfsrahmens für ein Aggregatelager;
- Fig. 8: eine Ansicht in Fahrzeuglängsrichtung der an einem Längslenker und dem Querlenker befestigten Lageraufnahme gemäß Fig. 7 mit Darstellung der aussteifenden Befestigungspunkte; und
- Fig. 9: eine schematische Ansicht einer weiteren Ausführungsform der vorliegenden Erfindungsidee, bei der die Längsträger jeweils separat durch das Lenkgetriebegehäuse und dem Querträger versteift sind.

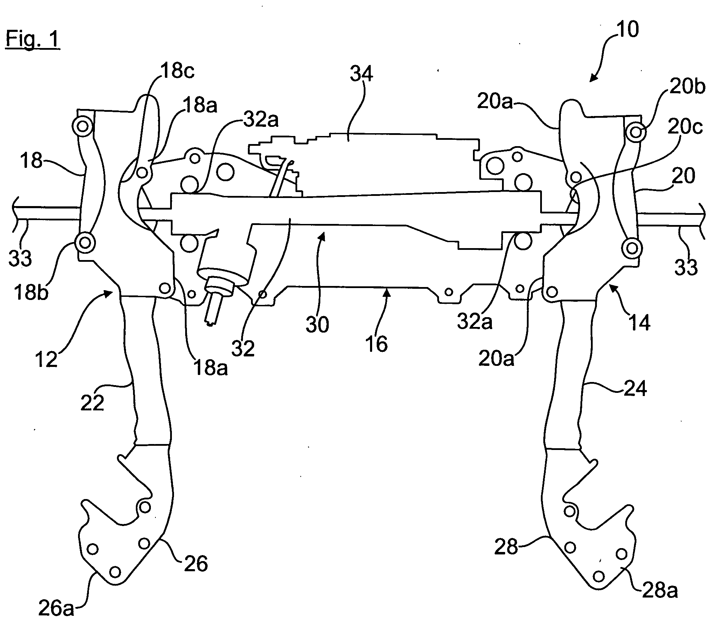

Die Fig. 1 zeigt einen an einem vorderen Aufbau eines Kraftfahrzeuges an zwei parallel in Fahrzeuglängsrichtung verlaufenden Längsträgern (nicht dargestellt) befestigbaren U-förmigen Hilfsrahmen 10, der sich im wesentlichen aus zwei nach hinten erstreckenden Längsträgern 12, 14 und einem mit den Längsträgern 12, 14 fest verschraubten, etwa plattenförmigen, vorderen Querträger 16 zusammensetzt.

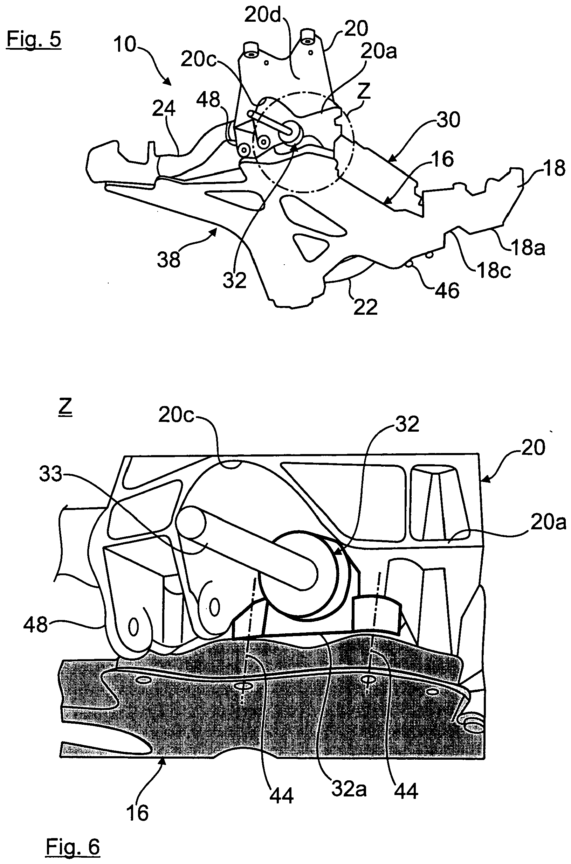

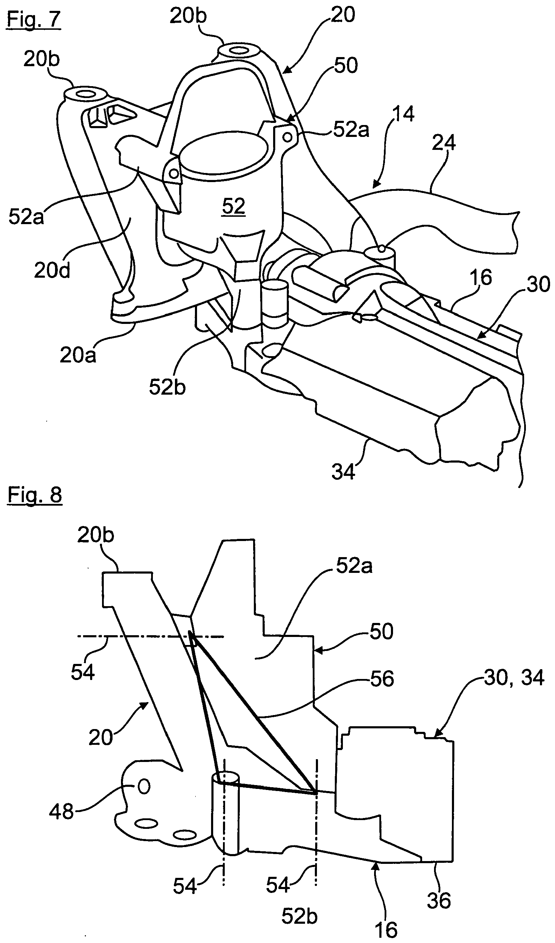

Zur quersteifen Verbindung des Querträgers 16 mit den Längsträgern 12, 14 sind die Längsträger 12, 14 mit in der Seitenansicht (zum Beispiel Fig. 5 oder 7) in etwa rechteckförmigen Funktionsknoten bzw. Kopfstücken 18, 20 versehen, deren untere, nach innen gerichtete Randflansche 18a, 20a über mehrere Befestigungsschrauben (nicht dargestellt) mit den korrespondierenden Randbereichen des Querträgers 16 verschraubt sind.

An die Funktionsknoten 18, 20, die als Gussteile aus zum Beispiel einer AI-Legierung hergestellt sind, schließen rohrförmige Abschnitte 22, 24 der Längsträger 12, 14 an, die an ihren Endbereichen in ebenfalls als Guss- oder Schmiedeteile hergestellte Lageraufnahmen 26, 28 übergehen.

Ferner sind an die in der Draufsicht betrachtet gabelförmigen Lageraufnahmen 26, 28 Befestigungsflansche 26a, 28a angeformt, über die die Lageraufnahmen 26, 28 mittels hier beispielhaft jeweils zwei Befestigungsschrauben fest mit den aufbauseitigen Längsträgern verschraubbar sind.

Die weitere Befestigung des Hilfsrahmens 10 an den aufbauseitigen Längsträgern erfolgt über die Funktionsknoten 18, 20, an deren oberen Randflanschen 18b, 20b jeweils zwei Bohrungen vorgesehen sind, durch die hindurch die Funktionsknoten 18, 20 mit den aufbauseitigen Längsträgern fest verschraubbar sind.

Auf dem Querträger 16 ist ein Zahnstangen-Lenkgetriebe 30 angeordnet, dessen rohrförmiges Gehäuse 32 mittels zweier, außen liegender Befestigungskonsolen 32a und hier weiter beispielhaft jeweils zweier Schrauben (ohne Bezugszeichen) fest mit dem Querträger 16 verschraubt ist und deshalb teiltragend insbesondere dessen Verwindungssteifigkeit aber auch Biegesteifigkeit erhöht.

Die nur teilweise dargestellten Spurstangen 33 des Lenkgetriebes 30 erstrecken sich dabei oberhalb des Querträgers 16 bzw. durch nach unten offene Ausnehmungen 18c, 20c an den unteren Randflanschen 18a, 20a der Kopfstücke 18, 20 hindurch nach außen zu den nicht dargestellten Radaufhängungen des Kraftfahrzeuges.

An das Lenkgetriebe 30 ist oberhalb des Querträgers 16 ein elektrischer Stellmotor 34 angebaut, der über zumindest eine weitere Schraubverbindung bei 36 (vgl. zum Beispiel Fig. 8) ebenfalls mit dem Querträger 16 verschraubt ist.

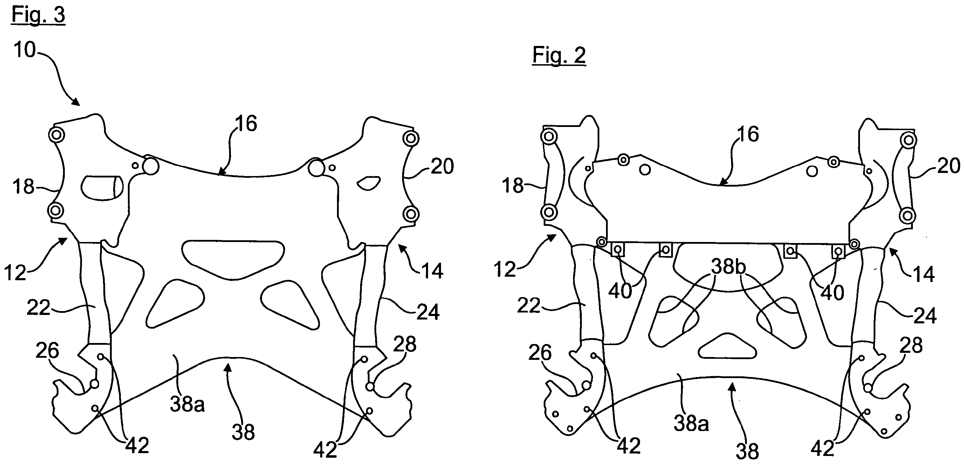

Der plattenförmige Querträger 16, der mit aussteifenden Einformungen und Ausbuchtungen versehen sein kann, kann mit einer fachwerkartigen Verstrebung 38 kombiniert sein, die über Befestigungspunkte 40 (Fig. 1 und 2) an dem Querträger 16 und über weitere Befestigungspunkte 42 (Fig. 2) an den Lageraufnahmen 26, 28 der Längsträger 12, 14 angeschraubt ist.

In die ebenfalls plattenförmig oder mit einem offenen Profil ausgeführte Verstrebung 38 ist wie ersichtlich ein hinterer Querträger 38a integriert, der über angeformte Streben 38b mit dem vorderen Querträger 16 verbunden ist.

Gemäß Fig. 3 kann der Querträger 16 mit der Verstrebung 38 auch einstückig ausgeführt sein, so dass die Befestigungspunkte 40 bzw. die entsprechenden Schraubverbindungen entfallen können.

Zu einem gegebenenfalls erforderlichen Ausbau des Lenkgetriebes 30 mit gegebenenfalls einem elektrischen Stellmotor 34 kann der Querträger 16 mit gegebenenfalls der Verstrebung 38 von den Längsträgern 12, 14 gelöst werden, so dass das Lenkgetriebe 30 nach unten demontierbar ist.

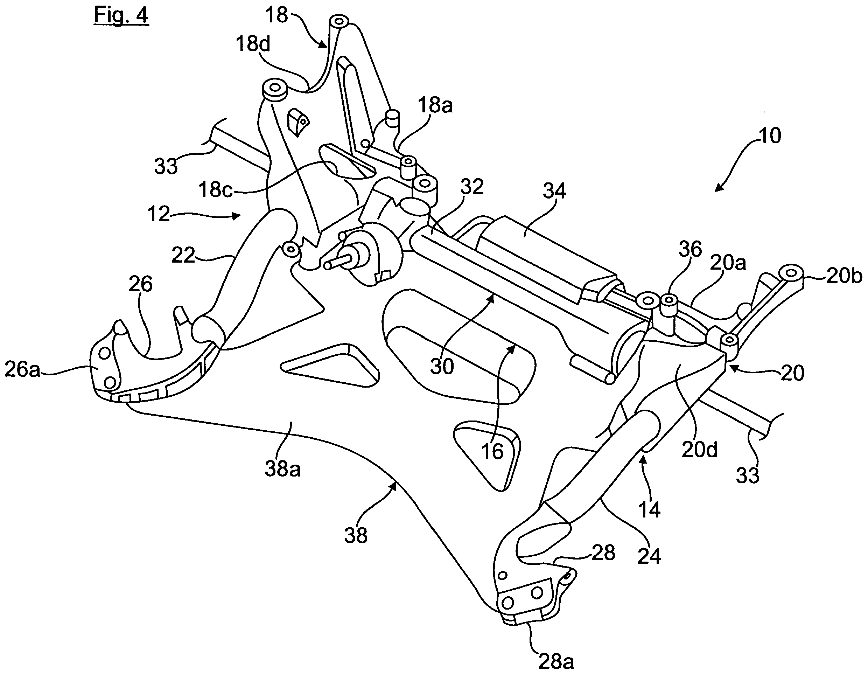

Die Fig. 4 bis 8 zeigen eine weitere Ausführung eines Hilfsrahmens 10, die teilweise auf die Ausführung gemäß den Fig. 1 bis 3 übertragbar ist und nur soweit beschrieben ist, als sie sich von den Fig. 1 bis 3 wesentlich unterscheidet. Funktionell gleiche Teile sind mit gleichen Bezugszeichen versehen.

Abweichend zu den Fig. 1 bis 3 ist das Lenkgetriebe 30 bzw. dessen Gehäuse 32 in die Befestigung des Querträgers 16 an den Funktionsknoten 18, 20 der Längsträger 12, 14 wie folgt integriert:

Gemäß den Fig. 5 und 6 sind die Befestigungskonsolen 32a des Gehäuses 32 des Lenkgetriebes 30 bis zu den unteren Randflanschen 18a, 20a der Funktionsknoten 18, 20 nach außen geführt, wobei deren hier beispielhaft jeweils zwei Befestigungsbohrungen mit korrespondierenden Bohrungen in den unteren Randflanschen 18a, 20a der Funktionsknoten 18, 20 und in dem Querträger 16 übereinstimmen.

Daraus resultiert, wie insbesondere aus Fig. 6 anhand des Funktionsknotens 20 ersichtlich ist, dass von hier beispielhaft vier Befestigungsschrauben (nicht dargestellt) zwischen dem Kopfstück 20 und dem Querträger 16 die jeweils inneren, hier die beiden inneren Befestigungsschrauben wie mit den gestrichelten Linien 44 angedeutet sich durch den Querträger 16, die Befestigungskonsole 32a und schließlich durch den Randflansch 20a in einer gemeinsamen Schraubverbindung erstrecken. Das Lenkgetriebegehäuse 32 ist somit teiltragend in den Schraubverbund Querträger 16 - Kopfstücke 18, 20 der Längsträger 12, 14 eingespannt, nach unten aber durch Lösen der Schraubverbindungen demontierbar.

An die Funktionsknoten 18, 20 der Längsträger 12, 14 sind des Weiteren an den unteren Randflanschen 18a, 20a gabelförmige Lageraufnahmen 46, 48 angeformt. Die Lageraufnahmen 26, 28 bzw. 46, 48 des Hilfsrahmens 10 dienen zur Anlenkung von nicht dargestellten Lenkern der Radaufhängungen des Kraftfahrzeuges.

Gemäß den Fig. 7 und 8 sind an den Funktionsknoten 18, 20 (es ist nur der Funktionsknoten 20 des Längsträgers 14 dargestellt) Lageraufnahmen 50 für nicht dargestellte Aggregatelager eines Antriebsaggregates des Kraftfahrzeuges angeordnet, die sich jeweils aus einem becherförmigen Grundkörper 52 und daran angeformten seitlichen Befestigungskonsolen 52a und einer nach unten abragenden Befestigungskonsole 52b zusammensetzen.

Die seitlichen Befestigungskonsolen 52a sind mittels nicht dargestellter Befestigungsschrauben mit der Basiswand 18d bzw. 20d der Funktionsknoten 18, 20 verschraubt, während die untere, der Fahrzeugmitte zu versetzte Befestigungskonsole 52b mit dem unteren Querlenker 16 verschraubt ist.

Wie die Fig. 8 dazu zeigt, bilden in einer Ansicht in Fahrzeuglängsrichtung die korrespondierenden Befestigungspunkte zwischen den Schraubverbindungen der Funktionsknoten 18, 20 mit dem Querlenker 16 und die Schraubverbindungen zwischen der Lageraufnahme 50 mit den Funktionsknoten 18, 20 und dem Querlenker 16 (eingezeichnete Linien 54) ein aussteifendes Dreieck 56, das somit wesentlich zur Quersteifigkeit der Schraubverbindungen bzw. des Hilfsrahmens 10 beiträgt.

Die im Gießverfahren hergestellten Funktionsknoten 18, 20 sind wie insbesondere die Fig. 5 und 6 zeigen, mit aussteifenden Verrippungen, Flanschen und Stegen (ohne Bezugszeichen) versehen, um eine leichte und dennoch biegesteife Konstruktion zu schaffen. Die rohrförmigen Abschnitte 22, 24 sind mit den Funktionsknoten 18, 20 verschweißt, während die Lageraufnahmen 26, 28 einstückig mit den Abschnitten 22, 24 hergestellt sind.

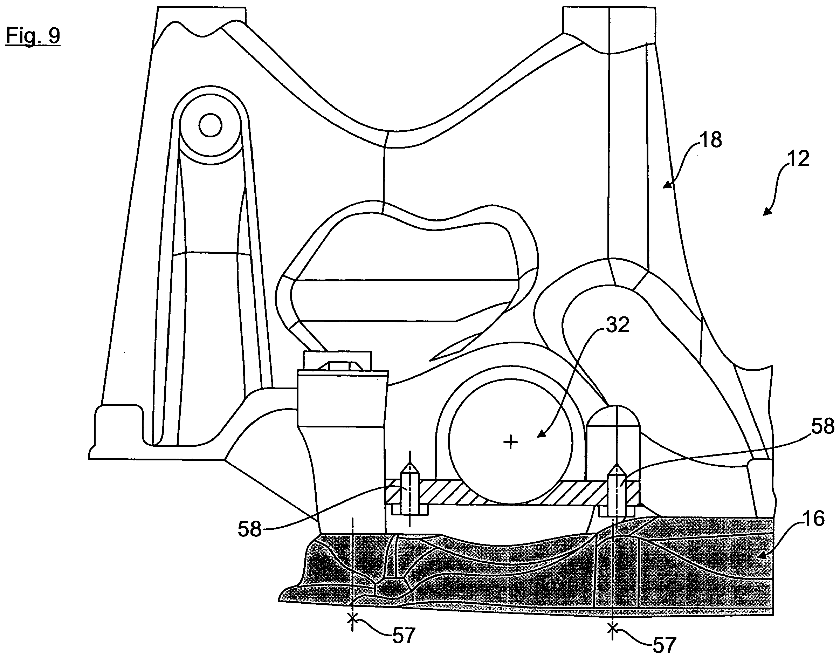

In der Fig. 9 ist schließlich eine weitere erfindungsgemäße Alternative gezeigt, bei der der Querträger 16 als separates Bauteil an den Funktionskonten 18, 20 (in Fig. 9 ist lediglich der Funktionsknoten 18 gezeigt) der Längsträger 12, 14 angeboten ist, und zwar an separaten Anbindungsstellen mittels hier lediglich äußerst schematisch und prinzipiell dargestellter Schraubverbindungen 57.

Des Weiteren ist das Lenkgetriebegehäuse 32 in diesem Ausführungsbeispiel ebenfalls unabhängig vom Querträger 16, separat an den Funktionsknoten 18, 20 der Längsträger 12, 14 angebunden, zum Beispiel mittels der in der Fig. 9 lediglich äußerst schematisch dargestellten Schraubverbindungen 58. Das heißt, dass bei dieser Ausführungsvariante die Längsträger 12, 14 im Bereich ihrer Funktionsknoten 18, 20 jeweils separat durch das Lenkgetriebegehäuse 32 und den Querträger 16 ausgesteift werden. Auch hier wird somit wieder, wie bei allen zuvor gezeigten bzw. beschriebenen Ausführungsformen, das Lenkgetriebegehäuse 32 vom Querträger 16 von unten her abdeckt, auch wenn bei diesem Ausführungsbeispiel keine direkte Verbindung zwischen dem Lenkgetriebegehäuse 32 und dem Querträger 16 besteht.

Die Erfindung ist nicht auf die dargestellten Ausführungsbeispiele beschränkt, sondern kann Kombinationen der unterschiedlichen Ausführungen bilden. In der Darstellung des Hilfsrahmens 10 gemäß den Fig. 1 bis 3 ist der besseren Übersichtlichkeit wegen die Lageraufnahme 50 für die Aggregatelager des Kraftfahrzeuges nicht eingezeichnet.

## Patentansprüche

1. Hilfsrahmen für Kraftfahrzeuge, der an Längsträgern des Aufbaus des Kraftfahrzeuges befestigt ist und zwei Längsträger (12, 14) und zumindest einen Querträger (16) aufweist, an dem ferner Befestigungsstellen für Radaufhängungselemente und/oder für Aggregatelager vorgesehen sind, wobei der Hilfsrahmen (10) in etwa U-förmig ausgebildet ist, mit den zwei seitlichen Längsträgern (12, 14) als U-Schenkel und dem damit lösbar verbundenen Querträger (16) als U-Basis, wobei der Querträger (16) und/oder die Längsträger (12, 14) mit einem Lenkgetriebegehäuse (32) versteift ist bzw. sind, **dadurch gekennzeichnet, dass** der Hilfsrahmen (10) zusätzlich mit einem zwischen den Längsträgern (12, 14) verlaufenden Versteifungselement (38) versteift ist, das mit dem Querträger (16) fest verbunden ist, und dass der Querträger (16) plattenförmig und flächig ausgebildet ist und in der durch das Versteifungselement (38) aufgespannten Ebene liegt, und dass das Lenkgetriebegehäuse (32), in Fahrzeughochachsenrichtung gesehen, von oben her auf den Querträger (16) aufgesetzt ist.

2. Hilfsrahmen nach Anspruch 1, **dadurch gekennzeichnet, dass** das Lenkgetriebegehäuse (32) lediglich mit dem Querträger (16) verbunden ist, insbesondere das Lenkgetriebegehäuse (32) mittels mehrerer Befestigungsschrauben mit dem Querträger (16) verschraubt ist.

3. Hilfsrahmen nach Anspruch 2, **dadurch gekennzeichnet, dass** die Längsträger (12, 14) mit dem Querträger (16) mittels mehrerer Befestigungsmittel, insbesondere mittels mehrerer Befestigungsschrauben, verbunden sind.

4. Hilfsrahmen nach Anspruch 1, **dadurch gekennzeichnet, dass** das Lenkgetriebegehäuse (32) zu dessen Festlegung am Querträger (16) mit gegenüberliegenden Gehäusebereichen jeweils zwischen den Längsträgern (12, 14) und dem Querträger (16) angeordnet und/oder eingespannt ist, wobei bevorzugt vorgesehen ist, dass Befestigungsmittel, insbesondere Befestigungsschrauben, vom Querträger (16) oder vom Längsträger (12, 14) aus durch entsprechende Lenkgetriebegehäusebereiche hindurch in den jeweiligen Längsträger (12, 14) bzw. in den Querträger (16) einschraubbar sind.

5. Hilfsrahmen nach Anspruch 1, **dadurch gekennzeichnet, dass** das Lenkgetriebegehäuse (32) lediglich mit den Längsträgern (12, 14) verbunden ist, insbesondere das Lenkgetriebegehäuse (32) an Funktionsknoten (18, 20) der Längsträger (12, 14) angebunden ist, an denen auch der Querträger beabstandet zu den Anbindungspunkten des Lenkgetriebegehäuses (32) angebunden ist.

6. Hilfsrahmen nach einem der vorhergehenden Ansprüche, **dadurch gekennzeichnet, dass** sich die Längsträger (12, 14) im Wesentlichen aus jeweils einem Längsabschnitt (22, 24), insbesondere rohrförmigen Abschnitt (22, 24), und einem Funktionsknoten als Kopfstück (18, 20), insbesondere einem in der Seitenansicht gesehen etwa rechteckförmigen, quaderartigen oder quadratischen Funktionsknoten (18, 20), zusammensetzen, welcher Funktionsknoten (18, 20) über wenigstens ein, bevorzugt mehrere lösbare Befestigungsmittel, insbesondere über zumindest zwei Befestigungsschrauben, an den Aufbau-Längsträgern befestigt ist und an seiner Unterseite (18a, 20a) eine im montierten Zustand in Fahrzeughochachsenrichtung nach unten offenen Ausnehmung (18c, 20c), insbesondere für das Lenkgetriebe (30) oder Bauteile davon aufweist.

7. Hilfsrahmen nach Anspruch 6, **dadurch gekennzeichnet, dass** der Funktionsknoten (18, 20) als Gussteil ausgeführt ist, mit einer Basiswand (18d, 20d) und aussteifenden Rippen und Randflanschen (18a, 20a, 18b, 20b), wobei bevorzugt vorgesehen ist, dass an den unteren Randflanschen (18a, 20a) das Gehäuse (32) des Lenkgetriebes (30) und der Querträger (16) festlegbar oder anschraubbar sind.

8. Hilfsrahmen nach Anspruch 6 oder 7, **dadurch gekennzeichnet, dass** an den Funktionsknoten (18, 20) der Längsträger (12, 14) separat hergestellte Lageraufnahmen (50) für Aggregatelager, insbesondere für Motorlager, oder Aggregatelager selbst befestigt sind, die einen Grundkörper (52) aufweisen, der jeweils durch angeformte Befestigungskonsolen (52a, 52b) mit den Funktionsknoten (18, 20) der Längsträger (12, 14) und/oder dem darunter angeordneten Querträger (16) und/oder dem Lenkgetriebegehäuse (32) lösbar verbunden ist, insbesondere mittels wenigstens einer Schraubverbindung verschraubt ist.

9. Hilfsrahmen nach Anspruch 8, **dadurch gekennzeichnet, dass** jeweils wenigstens eine seitliche, insbesondere lösbare Verbindung, insbesondere wenigstens eine Schraubverbindung, zwischen den Lageraufnahmen (50) oder Aggregatelagern und den Funktionsknoten (18, 20) zusammen mit wenigstens einer in Fahrzeughochachsenrichtung darunter liegenden Verbindung, insbesondere einer nach innen versetzten Schraubverbindung zwischen der Lageraufnahme (50) bzw. dem Aggregatelager und dem Querträger (16) sowie mit wenigstens einer Verbindung, insbesondere wenigstens einer in Fahrzeughochachsenrichtung gesehen unteren Schraubverbindung, zwischen den Funktionsknoten (18, 20) der Längsträger (12, 14) und dem Querträger (16) ein die Verbindungen, insbesondere die Schraubverbindungen, und damit den Hilfsrahmen (10) aussteifendes Dreieck (56) bilden.

10. Hilfsrahmen nach einem der vorhergehenden Ansprüche, **dadurch gekennzeichnet, dass** das Versteifungselement (38) durch eine fachwerkartige Verstrebung gebildet ist.

11. Hilfsrahmen nach einem der vorhergehenden Ansprüche, **dadurch gekennzeichnet, dass** das Versteifungselement (38) durch wenigstens ein separates und mit den Längsträgern (12, 14) verbundenes, insbesondere mittels wenigstens einer Schraubverbindung verbundenes Bauteil hergestellt ist.

12. Hilfsrahmen nach einem der vorhergehenden Ansprüche, **dadurch gekennzeichnet, dass** das Versteifungselement (38) einstückig und/oder materialeinheitlich mit dem vorzugsweise plattenförmigen und/oder flächigen Querträger (16) ausgeführt ist, wobei bevorzugt vorgesehen ist, dass seitliche Abschnitte des Versteifungselementes (38) an den Längsträgern (12, 14) festgelegt, insbesondere mittels wenigstens einer Schraubverbindung verschraubt sind.

13. Hilfsrahmen nach einem der Ansprüche 6 bis 12, **dadurch gekennzeichnet, dass** an den Funktionsknoten (18, 20) und/oder an Längsabschnitten (22, 24) der Längsträger (12, 14) jeweils im Anbindungsbereich des Querträgers (16) und/oder an dem Versteifungselement (38) Lageraufnahmen (26, 28, 46, 48) für Radaufhängungselemente angeordnet sind.

14. Hilfsrahmen nach Anspruch 13, **dadurch gekennzeichnet, dass** die Lageraufnahmen (26, 28) im Endbereich der Längsabschnitte (22, 24) der Längsträger (12, 14) durch in der Draufsicht etwa U-förmige Gussteile gebildet sind, die zudem Befestigungsflansche (26a, 28a) für die Befestigung der Längsträger (12, 14) an den Aufbau-Längsträgern des Kraftfahrzeuges aufweisen und die mit den Längsabschnitten (22, 24) fest verbunden, insbesondere verschweißt, oder einstückig ausgeführt sind.

## Claims

1. Subframe for motor vehicles, which is fixed to longitudinal members of the body of the motor vehicle and two longitudinal members (12, 14) and at least one cross member (16) on which mounting points for wheel suspension elements and/or for assembly bearings are also provided, wherein the subframe (10) is substantially U-shaped, having two lateral longitudinal members (12, 14) as a U-leg and the cross member (16) releasably connected thereto as a U-base, wherein the cross member (16) and/or the longitudinal members (12, 14) is/are reinforced with a steering gear housing (32), **characterised in that** the subframe (10) is additionally reinforced with a reinforcement element (38) extending between the longitudinal members (12, 14), which is fixedly connected to the cross member (16), and **in that** the cross member (16) is plate-shaped and planar in design and is located in the plane spanned by the reinforcement element (38) and **in that**, viewed in the vehicle vertical axis direction, the steering gear housing (32) is placed on the cross member (16) from above.

2. Subframe according to claim 1, **characterised in that** the steering gear housing (32) is only connected to the cross member (16), in particular the steering gear housing (32) is screwed to the cross member (16) by means of a plurality of fastening screws.

3. Subframe according to claim 2, **characterised in that** the longitudinal members (12, 14) are connected to the cross member (16) by means of a plurality of fastening means, in particular by means of a plurality of fastening screws.

4. Subframe according to claim 1, **characterised in that** to fix it to the cross member (16), the steering gear housing (32) is arranged and/or fixed with opposing housing regions between the longitudinal members (12, 14) and the cross member (16) in each case, wherein it is preferably provided that fastening means, in particular fastening screws, issuing from the cross member (16) or longitudinal members (12, 14), can be screwed through corresponding steering gear housing regions into the respective longitudinal members (12, 14) or into the cross member (16).

5. Subframe according to claim 1, **characterised in that** the steering gear housing (32) is only connected to the longitudinal members (12, 14), in particular the steering gear housing (32) is fastened to function nodes (18, 20) of the longitudinal members (12, 14) to which the cross member is also fastened at a distance from the fastening points of the steering gear housing (32).

6. Subframe according to any one of the preceding claims, **characterised in that** the longitudinal members (12, 14) substantially each comprise a longitudinal section (22, 24), in particular tubular section (22, 24) and a function node as the head piece (18, 20), in particular a, viewed in a side view, substantially rectangular, cuboidal or square function node (18, 20), which function node (18, 20) is connected by at least one, preferably a plurality of, detachable fastening means, in particular by at least two fastening screws, to the body longitudinal members and at its lower side (18a, 20a) has a recess (18c, 20c) which, in the assembled state, is open at the bottom in the vehicle vertical axis direction, in particular for the steering gear (30) or components thereof.

7. Subframe according to claim 6, **characterised in that** the function node (18, 20) is designed as a cast part, having a base wall (18d, 20d) and reinforcing ribs and edge flanges (18a, 20a, 18b, 20b), wherein it is preferably provided that the housing (32) of the steering gear (30) and the cross member (16) can be fixed or screwed to the lower edge flanges (18a, 20a).

8. Subframe according to claim 6 or 7, **characterised in that** separately produced bearing seats (50) for assembly bearings, in particular for motor bearings, or assembly bearings themselves are fastened to the function nodes (18, 20) of the longitudinal members (12, 14), which seats have a basic body (52) which is detachably connected in each case by moulded-on fastening brackets (52a, 52b), in particular is screwed by means of at least one screw connection, to the function nodes (18, 20) of the longitudinal members (12, 14) and/or the cross member (16) arranged therebelow and/or the steering gear housing (32).

9. Subframe according to claim 8, **characterised in that** in each case at least one lateral, in particular detachable connection, in particular at least one screw connection, between the bearing seats (50) or assembly bearings and the function nodes (18, 20) together with at least one connection located therebelow in the vehicle vertical axis direction, in particular an inwardly offset screw connection between the bearing seat (50) or the bearing assembly and the cross member (16) and having at least one connection, in particular at least one, viewed in the vehicle vertical axis direction, lower screw connection, between the function nodes (18, 20) of the longitudinal member (12, 14) and the cross member (16) form a triangle (56) that reinforces the connections, in particular the screw connections, and therewith the subframe (10).

10. Subframe according to any one of the preceding claims, **characterised in that** the reinforcement element (38) is formed by a framework-like strut.

11. Subframe according to any one of the preceding claims, **characterised in that** the reinforcement element (38) is produced by at least one separate component connected to the longitudinal members (12, 14), in particular by means of at least one screw connection.

12. Subframe according to any one of the preceding claims, **characterised in that** the reinforcement element (38) is designed in one piece with and/or or made from the same material as the preferably plate-like and/or planar cross member (16), wherein it is preferably provided that lateral sections of the reinforcement element (38) are fixed to the longitudinal members (12, 14), in particular by means of at least one screw connection.

13. Subframe according to any one of claims 6 to 12, **characterised in that** bearing seats (26, 28, 46, 48) for wheel suspension elements are arranged on the function nodes (18, 20) and/or on longitudinal sections (22, 24) of the longitudinal members (12, 14) in each case in the connection region of the cross member (16) and/or n the reinforcement element (38).

14. Subframe according to claim 13, **characterised in that** the bearing seats (26, 28) are formed in the end region of the longitudinal sections (22, 24) of the longitudinal members (12, 14) by, in plain view, substantially U-shaped cast parts which have, moreover, fastening flanges (26a, 28a) for fastening the longitudinal members (12, 14) to the body longitudinal members of the motor vehicle, and which are permanently connected to, in particular welded to, or designed in one piece with the longitudinal sections (22, 24).

## Revendications

1. Faux-châssis pour véhicules automobiles, qui est fixé au niveau de longerons de la carrosserie du véhicule automobile et qui comporte deux longerons (12, 14) et au moins une traverse (16) au niveau de laquelle sont aussi prévus des points de fixation pour des éléments de suspension de roue et/ou pour des supports de groupe moteur, dans lequel le faux-châssis (10) est réalisé sensiblement en forme de U, avec les deux longerons latéraux (12, 14) en tant que branches du U et avec la traverse (16) assemblée à ceux-ci de manière amovible en tant que base du U, dans lequel la traverse (16) et/ou les longerons (12, 14) est rigidifiée ou sont rigidifiés avec un carter de mécanisme de direction (32), **caractérisé en ce que** le faux-châssis (10) est rigidifié en plus avec un élément de renfort (38) qui s'étend entre les longerons (12, 14) et qui est assemblé de manière fixe à la traverse (16) et **en ce que** la traverse (16) est conçue en forme de plaque et plane et est située dans le plan sous-tendu par l'élément de renfort (38) et **en ce que** le carter de mécanisme de direction (32) est placé à partir d'en haut, vu dans la direction de l'axe vertical du véhicule, sur la traverse (16).

2. Faux-châssis selon la revendication 1, **caractérisé en ce que** le carter de mécanisme de direction (32) est assemblé simplement à la traverse (16), en particulier le carter de mécanisme de direction (32) est vissé avec la traverse (16) au moyen de plusieurs vis de fixation.

3. Faux-châssis selon la revendication 2, **caractérisé en ce que** les longerons (12, 14) sont assemblés à la traverse (16) au moyen de plusieurs moyens de fixation, en particulier au moyen de plusieurs vis de fixation.

4. Faux-châssis selon la revendication 1, **caractérisé en ce que,** pour sa fixation au niveau de la traverse (16) avec des zones de carter opposées, le carter de mécanisme de direction (32) est agencé et/ou monté à chaque fois entre les longerons (12, 14) et la traverse (16), dans lequel il est prévu de préférence que des moyens de fixation, en particulier des vis de fixation, puissent être vissés à partir de la traverse (16) ou du longeron (12, 14), à travers des zones de carter de mécanisme de direction correspondantes, dans le longeron (12, 14) respectif ou dans la traverse (16).

5. Faux-châssis selon la revendication 1, **caractérisé en ce que** le carter de mécanisme de direction (32) est assemblé simplement aux longerons (12, 14), dans lequel le carter de mécanisme de direction (32) est rattaché en particulier à des noeuds fonctionnels (18, 20) des longerons (12, 14) auxquels la traverse est aussi rattachée à une certaine distance des points de rattachement du carter de mécanisme de direction (32).

6. Faux-châssis selon l'une des revendications précédentes, **caractérisé en ce que** les longerons (12, 14) se composent globalement à chaque fois d'un tronçon longitudinal (22, 24), notamment d'un tronçon tubulaire (22, 24), et d'un noeud fonctionnel en tant que pièce de tête (18, 20), en particulier d'un noeud fonctionnel (18, 20) à peu près rectangulaire, parallélépipédique ou carré, considéré dans la vue de côté, lequel noeud fonctionnel (18, 20) est fixé par l'intermédiaire d'au moins un et de préférence plusieurs moyens de fixation amovibles, en particulier par l'intermédiaire d'au moins deux vis de fixation, aux longerons de carrosserie et comporte au niveau de sa face inférieure (18a, 20a) un évidement (18c, 20c) qui est ouvert vers le bas dans la direction de l'axe vertical du véhicule à l'état monté, en particulier pour le mécanisme de direction (30) ou pour des pièces de celui-ci.

7. Faux-châssis selon la revendication 6, **caractérisé en ce que** le noeud fonctionnel (18, 20) est réalisé comme une pièce moulée en fonte, avec une paroi de base (18d, 20d) et des nervures et collerettes de rigidification (18a, 20a, 18b, 20b), dans lequel il est prévu de préférence que le carter (32) du mécanisme de direction (30) et la traverse (16) peuvent être fixés ou vissés au niveau des collerettes inférieures (18a, 20a).

8. Faux-châssis selon la revendication 6 ou 7, **caractérisé en ce que,** au niveau des noeuds fonctionnels (18, 20) des longerons (12, 14), sont fixés des logements de support (50) fabriqués séparément et destinés à des supports de groupe moteur, en particulier à des supports de moteur, ou des supports de groupe moteur eux-mêmes, lesquels logements comportent un corps de base (52) qui est assemblé de manière amovible, à chaque fois par des consoles de fixation (52a, 52b) formées dessus, aux noeuds fonctionnels (18, 20) des longerons (12, 14) et/ou à la traverse (16) agencée en dessous et/ou au carter de mécanisme de direction (32), en particulier qui est vissé au moyen d'au moins un assemblage vissé.

9. Faux-châssis selon la revendication 8, **caractérisé en ce que,** à chaque fois, au moins un assemblage latéral, en particulier amovible, en particulier au moins un assemblage vissé, forme entre les logements de support (50) ou les supports de groupe moteur et les noeuds fonctionnels (18, 20), conjointement avec au moins un assemblage situé en dessous, considéré dans la direction de l'axe vertical du véhicule, en particulier un assemblage vissé décalé vers l'intérieur entre le logement de support (50) ou le support de groupe moteur et la traverse (16) ainsi qu'avec au moins un assemblage, en particulier au moins un assemblage vissé inférieur, considéré dans la direction de l'axe vertical du véhicule, entre les noeuds fonctionnels (18, 20) des longerons (12, 14) et la traverse (16), un triangle (56) qui rigidifie les assemblages, en particulier les assemblages vissés, et donc le faux-châssis (10).

10. Faux-châssis selon l'une des revendications précédentes, **caractérisé en ce que** l'élément de renfort (38) est formé par une entretoise à la manière d'une charpente.

11. Faux-châssis selon l'une des revendications précédentes, **caractérisé en ce que** l'élément de renfort (38) est fabriqué par au moins une pièce séparée et assemblée aux longerons (12, 14), en particulier assemblée au moyen d'au moins un assemblage vissé.

12. Faux-châssis selon l'une des revendications précédentes, **caractérisé en ce que** l'élément de renfort (38) est réalisé d'une seule pièce avec la traverse (16) de préférence en forme de plaque et plane et/ou dans le même matériau que celle-ci, dans lequel il est prévu de préférence que des tronçons latéraux de l'élément de renfort (38) sont fixés aux longerons (12, 14), en particulier sont vissés au moyen d'au moins un assemblage vissé.

13. Faux-châssis selon l'une des revendications 6 à 12, **caractérisé en ce que,** au niveau des noeuds fonctionnels (18, 20) et/ou des tronçons longitudinaux (22, 24) des longerons (12, 14), des logements de support (26, 28, 46, 48) destinés à des éléments de suspension de roue sont agencées à chaque fois dans la zone de rattachement de la traverse (16) et/ou au niveau de l'élément de renfort (38).

14. Faux-châssis selon la revendication 13, **caractérisé en ce que** les logements de support (26, 28) sont formés dans la zone terminale des tronçons longitudinaux (22, 24) des longerons (12, 14) par des pièces moulées en fonte qui sont sensiblement en forme de U en vue de dessus et qui comportent en plus des collerettes de fixation (26a, 28a) pour la fixation des longerons (12, 14) sur les longerons de carrosserie du véhicule automobile et qui sont assemblées de manière fixe aux tronçons longitudinaux (22, 24), en particulier sont soudées à ceux-ci ou sont réalisées d'une seule pièce avec ceux-ci.
